# FASCICULE DE BREVET EUROPEEN

(11) **EP 0 931 457 B1**
(45) Date de publication et mention de la délivrance du brevet: **01.12.2004**
(21) Numéro de dépôt: 98101262.8
(22) Date de dépôt: 26.01.1998
(51) Int. Cl.: A21D 13/08, A21D 2/26, A21D 8/04

(54) **Pâte garnie croustillante après cuisson aux micro-ondes**
Gefülltes Teigprodukt, das durch Mikrowellen krustig wird
Filled dough which is crusty after being microwaved

(43) Date de publication de la demande: 28.07.1999
(73) Titulaire: SOCIETE DES PRODUITS NESTLE S.A., 1800 Vevey (CH)
(72) Inventeur: Ferrari Philippe, Fabiana, 60000 Beauvais (FR); Tharrault, Jean-François, 60001 Coincourt (FR)
(74) Mandataire: Thomas, Alain

(56) Documents cités:
- EP-A- 0 509 566
- EP-A- 0 588 426
- WO-A-96/11577
- GB-A- 698 762
- PATENT ABSTRACTS OF JAPAN vol. 097, no. 011, 28 novembre 1997 & JP 09 182555 A (TATSUMI YOSHIAKI), 15 juillet 1997
- PATENT ABSTRACTS OF JAPAN vol. 015, no. 282 (C-0850), 17 juillet 1991 & JP 03 098528 A (MIYOSHI OIL & FAT CO LTD), 24 avril 1991

## Description

La présente invention a pour objet une pâte garnie surgelée qui devient croustillante après cuisson aux micro-ondes.

Les produits croustillants actuellement sur le marché sont à base de pâtes précuites. Ces pâtes précuites sont normalement réchauffées aux micro-ondes. La croustillance de ces produits est entièrement due à la présence de suscepteurs qui crééent des températures d'environ 200°C au contact du produit et permettent ainsi un assèchement de la surface.

La cuisson de pâtes garnies crues aux micro-ondes est délicate car le temps de cuisson est court et la garniture arrive vite à des températures élevées. En outre, la distribution des micro-ondes est hétérogène. Les réactions de Maillard sont très faibles et on obtient alors des pâtes avec le goût de farine crue et sans brunissement.
Pour améliorer le brunissement extérieur de ces pâtes garnies lors d'une cuisson aux micro-ondes, on peut avoir recours à des suscepteurs mécaniques ou chimiques.
Le brevet US 5,069,916 décrit un procédé de brunissement d'une pâte utilisant comme suscepteur un solvant tel qu'un mélange pur ou dans l'eau de polyéthylène glycol ou de glycérine et d'émulsifiants.

Seule l'utilisation d'un emballage du type suscepteur contenant un léger film d'aluminium peut monter à des températures de 200°C dans les fours aux micro-ondes, permettant ainsi la coloration et la cuisson de la surface de la pâte qui se trouve à son contact. On obtient alors une légère croustillance. Mais lorsque la forme du produit ne permet pas un contact avec le suscepteur à la cuisson, la croustillance de la pâte ainsi que le goût de pâte cuite ne peuvent être obtenus de manière satisfaisante par ces procédés.

Ces pâtes présentent aussi l'inconvénient de ne pouvoir renfermer des garnitures qui montent très vite en température et s'échappent de la pâte par ébulition. Une augmentation de la teneur en eau de la garniture, pour permettre un temps de cuisson plus long pour la pâte, a pour conséquence la migration de l'eau de la garniture vers la pâte, modifiant et altérant ainsi les qualités organoleptiques et la texture de la pâte.

La présente invention se propose de remédier à ces inconvénients.

L'utilisation d'une barrière d'humidité dans des pâtes garnies, notamment pour éviter la migration de l'eau de la garniture vers la pâte, est décrit dans l'état de la technique. Par exemple, le document WO 96/11577 décrit une barrière d'humidité composée d'huile et d'au moins un hydrocolloïde. EP-0509566 utilise des triglycérides, sucres ou cires. Enfin, GB 698762 décrit une barrière composée d'une graisse alimentaire non liquide.

Dans la pâte garnie selon la présente invention, une garniture liquide à teneur en eau élevée est piégée dans la pâte par une barrière d'humidité disposée à son contact, caractérisée en ce que la barrière d'humidité est composée d'un mélange de matière grasse, d'une protéine filmogène et d'un hydrocolloïde.

Une telle pâte selon l'invention permet l'utilisation d'une garniture salée dont la teneur en eau peut atteindre 85%_{,} tout en conservant le goût de pâte cuite et une texture finale croustillante après une cuisson aux micro-ondes.

L'utilisation d'un suscepteur n'est plus nécessaire sur la partie supérieure du produit. Il peut être éventuellement remplacé par une coloration à base de thé, pour obtenir l'aspect habituel. La pâte croustillante selon l'invention permet de surcroît une cuisson plus rapide aux micro-ondes.

Pour mettre en oeuvre la présente invention, on peut préparer la pâte non garnie à partir d'un mélange de farine, levure désactivée, émulsifiant, pentosanase, acides aminés, graisse et eau.

La farine doit de préférence être choisie de manière à ce que l'absorption d'eau soit la plus réduite possible, mais permettant toutefois une bonne extensibilité de la pâte. Cela permet de réduire la quantité d'eau contenue dans la pâte.
La farine est de préférence de la farine biscuitière, mais de la farine boulangère peut également être utilisée. La quantité de farine ajoutée peut être comprise entre 40 et 60%, et de préférence entre 50 et 55% en poids par rapport au poids du mélange total.

De la levure désactivée peut être ajoutée au mélange. Par son action sur les ponts disulfure du gluten, elle permet d'augmenter nettement l'extensibilité de la pâte et réduire le rétreint lors de la mise en forme. Elle permet en outre de diminuer l'addition d'eau dans la pâte, sans porter préjudice à sa malléabilité. Enfin, la levure désactivée améliore aussi la croustillance de la pâte après cuisson aux micro-ondes en permettant un meilleur séchage et en réduisant la texture caoutchouteuse typique des pâtes cuites aux micro-ondes. La levure peut être ajoutée au mélange dans des proportions qui varient en fonction du type de farine employé. L'utilisation de farine boulangère nécessite une quantité de levure plus importante que celle nécessaire pour l'utilisation d'une farine biscuitière dont le réseau de gluten est déjà moins élastique. Les proportions en levure désactivée peuvent atteindre 0,04% en poids du mélange.

L'émulsifiant peut être choisi parmi les lécithines ou les esters d'acides gras tels que le sodium stéaryl lactilate, et de préférence parmi les esters d'acides gras de polyglycérol, notamment du décaglycérolester qui a un point de fusion inférieur à -15°C. Cela permet d'augmenter la vitesse de cuisson de la pâte aux micro-ondes. Incorporé de préférence directement à l'intérieur de la pâte, il permet en outre d'améliorer son extensibilité et d'en réduire l'élasticité. Le traitement mécanique de la pâte en est considérablement amélioré.
L'émulsifiant peut être incorporé directement à l'intérieur de la pâte à raison de 0,05% à 0,3% en poids par rapport au mélange de pâte, et de préférence dans des proportions comprises entre 0,1% et 0,2%.

L'addition d'une pentosanase, qui solubilise les pentosanes de la farine, permet de réduire son pouvoir d'absorption et de réduire ainsi la quantité d'eau à évaporer lors de la cuisson, tout en conservant à la pâte sa bonne malléabilité. Cette enzyme peut être ajoutée dans des proportions allant jusqu'à 1,5g pour 10kg de pâte. Elle permet en outre une légère augmentation des réactions de Maillard.

Des acides aminés peuvent être ajoutés au mélange. Ils peuvent être obtenus par hydrolyse enzymatique du gluten de blé par exemple ou sont des acides aminés purs comme la proline. Les acides aminés peuvent jouer le rôle de précurseur de goût de cuit et de brunissement, ils permettent en outre d'accélérer la cuisson de la pâte. Leurs proportions peuvent être comprises entre 0,1 et 0,3g par kg de pâte et de préférence 0,2 g/kg de pâte.

Des sucres peuvent également être ajoutés à la pâte sous forme de xylose, dextrose, fructose ou lactose dans cet ordre de préférence. L'ajout de sucres permet également d'améliorer la réaction de brunissement et de réduire l'effet de rétreint de la pâte. Le lactose peut être amené sous forme de poudre de lait ou de lactosérum. La présence des protéines de lactosérum permet également d'améliorer l'extensibilité de la pâte et d'augmenter la croustillance finale de la croûte.

La quantité de sucre ajoutée au mélange peut atteindre 3% en poids du mélange final et est de préférence comprise entre 1% et 2%.

La graisse, habituellement utilisée pour la préparation de telles pâtes, peut être partiellement remplacée par de l'huile ayant un point de fusion inférieur à -15°C. L'addition d'une telle huile peut représenter jusqu'à 40% de la quantité de graisse ajoutée, et de préférence 20%. On utilise de préférence des huiles polyinsaturées et plus particulièrement de l'huile de colza. Le point de fusion relativement bas de ces huiles, leur permet de monter très vite à des températures supérieures à 180°C lors de la réchauffe par micro-ondes.
Pour réaliser l'invention, la quantité de graisse ajoutée au mélange est de préférence comprise entre 20% et 40%. Elle est incorporée de façon hétérogène de manière à créer de fines couches de gras de quelques microns dans la pâte. La matière grasse utilisée pour obtenir ces couches est de préférence choisie de même consistance que la pâte. Ces couches de graisses servent de barrière à la vapeur à l'intérieur de la pâte, elles permettent une extension de la pâte et facilite l'évacuation de la vapeur vers l'extérieur. Ce procédé de type feuilleté contribue au caractère croustillant du produit, grâce à la finesse de plusieurs couches qui composent la pâte cuite aux micro-ondes.

Selon l'invention dans le but de permettre la croustillance de la pâte après la cuisson aux micro-ondes, il est disposé à la surface de la garniture liquide, une couche d'un mélange qui joue le rôle d'une barrière d'humidité.
Ce mélange peut se trouver soit sur le fond de la pâte, soit à la surface de la garniture liquide, à raison de 1 à 15g/100 cm2 et de préférence entre 4 et 8g/100cm2.
Ledit mélange contient de la matière grasse et plus particulièrement des triglycérides de chaîne moyenne dont le point de fusion est compris entre 20 et 35°C. La matière grasse peut être de même nature que la graisse précédemment utilisée dans la partie feuilletage. Elle est mélangée à l'état fondu avec un hydrocolloïde qui agit comme rétenteur d'humidité et une protéine filmogène, qui avec la matière grasse joue le rôle de barrière d'humidité. Les proportions de matière grasse dans ce mélange "barrière" peuvent varier de 80 à 98%, la protéine filmogène de 7 à 13% et l'hydrocollcïde de 0,7 à 1,3%.
La protéine filmogène est de préférence un caséinate de calcium ou de sodium et l'hydrocolloïde peut être un carragénane du type iota, par exemple.
En plus de l'effet barrière lors du stockage surgelé et de la réchauffe par micro-ondes, cette composition riche en matière grasse monte à des températures élevées en aidant la cuisson de la couche interne de la pâte et diminue l'impact des micro-ondes sur la garniture.

La pâte garnie est préparée par un procédé traditionnel. Après pétrissage des différents ingrédients du mélange, la pâte est laminée ou foncée puis garnie. Le produit est préparé dans un moule éventuellement avec un film suscepteur. La garniture est déposée entre la pâte après une étape de surgélation, ce qui permet de contrôler la forme du produit et éviter une distribution trop hétérogène des ondes.

La garniture contenue dans la pâte sera de préférence salée, avec une teneur en sels minéraux élevée comprise entre 2 et 5%. Sa teneur en eau peut atteindre 85%. A une telle valeur, une vitesse de réchauffe assez faible permettra d'éviter les phénomènes d'ébulition avant la cuisson de la pâte.

On peut préparer plusieurs sortes de garnitures et en particulier, une garniture allégée contenant moins de 1% de matière grasse et environ 7% de protéines. Des morceaux de viande et des légumes peuvent y êre dispersés.

La pâte garnie selon l'invention est de préférence surgelée en fin de préparation, puis conditionnée.

Sa cuisson s'effectue dans un micro-ondes à la puissance maximale pendant 2 à 3 minutes pour 100g de produit selon la puissance du four et la forme du produit.

Les exemples décrits ci-dessous ne sont pas limitatifs et servent à illustrer l'invention. Les pourcentages et les parties sont indiqués en poids.

### Exemple 1

Un mélange contenant 60% de farine biscuitière, 0,6% de sel fin, 0,1% de levure sèche désactivée, 0,72% de dextrose, 1,2% de poudre de lactosérum, 0,18% de décaglycérolester, 13,2% de graisse, 2,7% d'huile de colza raffinée, 18,5% d'eau, 0,01% de proline est pétri puis laminé à une épaisseur d'environ 3 mm et déposé dans un moule pour tourtes du type suscepteur. On pulvérise le fond avec la couche "barrière" et on dépose ensuite une garniture liquide de type béchamel avec des inclusions de légumes et/ou de viande. La proportion sauce: inclusion est environ de 50:50. La composition de la béchamel est la suivante : 74% d'eau, 12% de crème fraîche, 5,5% d'amidon et farine, 4% de graisse, 2,5% de sels et épices et 2% de lait en poudre. La teneur en eau de la sauce béchamel est de 81%.
On pulvérise la surface de la sauce béchamel avec la "barrière", puis on dépose le couvercle de pâte. La pâte garnie qui pèse 450g est ensuite surgelée. Après cuisson aux micro-ondes pendant 10 minutes, la pâte devient croustillante.

### Exemple 2, composition de la "barrière"

La "barrière" est composée d'un mélange de 267g de graisse sous forme de lard, 30g de caséinate de calcium et 3g de carragénane.

### Exemple 3

On prépare une pâte contenant 49% de farine, 0,6% de levure désactivée, 0,6% de lactosérum en poudre, 0,8% de sel, 0,2% de dextrose, 0,01% de proline, 22,7% d'eau, 26% de margarine feuilletage, 0,1% de decaglycérol, 0,02% de pentosanase.
La garniture est composée de 18% de viande hachée, 6% d'eau, 0,9% de liant, 46% de sauce tomate, 21,5% de légumes et herbes, 2% de vin blanc en poudre, 1,5% de sel, 0,3% d'épices.
La teneur en eau de la garniture est de 80%.
La pâte est préparée et surgelée à une épaisseur de 10 mm dans moules rond. La garniture est ensuite déposée entre les abaisses de pâte préalablement pulvérisées avec la couche "barrière". Une dorure à base de thé est déposée sur la partie supérieure de la pâte. Cette dorure a la composition suivante : 50% d'eau, 4% de thé en poudre, 44% d'huile de tournesol et 2% de gomme xanthane. La pâte garnie est ensuite surgelée. La cuisson de cette pâte garnie de 100g, aux micro-ondes dure 2 à 2,5 minutes.

## Revendications

1. Pâte garnie devenant croustillante après cuisson aux micro-ondes dans laquelle une garniture liquide, à teneur en eau élevée, est piégée dans la pâte par une barrière d'humidité disposée à son contact, **caractérisée en ce que**:
la barrière d'humidité est composée d'un mélange de matière grasse, d'une protéine filmogène et d'un hydrocolloïde.

2. Pâte garnie selon la revendication 1 dans laquelle la pâte contient 40 à 60% de farine, 20 à 40% de graisse, 10 à 25% d'eau, de la levure désactivée, un émulsifiant, une pentosanase et des acides aminés.

3. Pâte garnie selon la revendication 2 dans laquelle l'émulsifiant est choisi parmi les lécithines, les esters d'acides gras et notamment parmi les esters d'acides gras de polyglycérol.

4. Pâte garnie selon l'une des revendications 2 à 3 dans laquelle l'émulsifiant incorporé directement à l'intérieur de la pâte est le décaglycérolester dans des proportions comprises entre 0,1 et 0,3% par rapport au poids total de la pâte.

5. Pâte garnie selon la revendication 1 dans laquelle la garniture a une teneur en eau atteignant 85%.

6. Pâte garnie selon la revendication 1 dans laquelle la protéine filmogène est un caséinate de calcium et l'hydrocolloïde un carragénane.

7. Pâte garnie selon la revendication 2 dans laquelle la graisse est en partie sous forme d'une huile à point de fusion inférieur à -15°C et notamment un huile polyinsaturée de type huile de colza.

8. Pâte garnie selon l'une des revendications 1 à 8 présentée sous une forme surgelée.

## Claims

1. Filled pastry which becomes crusty after baking by means of microwaves, in which a liquid filling having a high water content is trapped inside the pastry by a moisture barrier arranged in contact therewith, **characterised in that**:
the moisture barrier is composed of a mixture of fat, a film-forming protein and a hydrocolloid.

2. Filled pastry according to claim 1, in which the pastry comprises from 40 to 60 % flour, from 20 to 40 % fat, from 10 to 25 % water, deactivated yeast, an emulsifier, a pentosanase and amino acids.

3. Filled pastry according to claim 2, in which the emulsifier is selected from lecithins, fatty acid esters and, especially, from polyglycerol fatty acid esters.

4. Filled pastry according to either claim 2 or claim 3, in which the emulsifier incorporated directly into the pastry is decaglycerol ester in proportions of from 0.1 to 0.3 %, based on the total weight of the pastry.

5. Filled pastry according to claim 1, in which the filling has a water content of up to 85 %.

6. Filled pastry according to claim 1, in which the film-forming protein is a calcium caseinate and the hydrocolloid is a carrageenan.

7. Filled pastry according to claim 2, in which the fat is partly in the form of an oil having a melting point below -15°C and especially a polyunsaturated oil of the colza-oil type.

8. Filled pastry according to any one of claims 1 to 8 in frozen form.

## Patentansprüche

1. Gefüllter Teig, der nach Garung mit Hilfe von Mikrowellen knusprig wird, bei dem eine flüssige Füllung mit hohem Wassergehalt im Teig durch eine im Kontakt damit angeordnete Feuchtigkeitsperrschicht eingefangen ist, **dadurch gekennzeichnet, daß** die Feuchtigkeitssperrschicht aus einer Mischung von Fett, einem filmbildenden Protein und einem Hydrocolloid besteht.

2. Gefüllter Teig nach Anspruch 1, bei dem der Teig 40 bis 60 % Mehl, 20 bis 40 % Fett, 10 bis 25 % Wasser, desaktivierte Hefe, einen Emulgator, Pentosanase und Aminosäuren enthält.

3. Gefüllter Teig nach Anspruch 2, bei dem der Emulgator aus den Lecithinen, den Fettsäureestern und insbesondere aus den Polyglycerin-Fettsäureestern ausgewählt ist.

4. Gefüllter Teig nach einem der Ansprüche 2 bis 3, bei dem der direkt in das Innere des Teigs eingearbeitete Emulgator Decaglycerinester in Anteilen von 0,1 bis 0,3 %, bezogen auf das Gesamtgewicht des Teigs, ist.

5. Gefüllter Teig nach Anspruch 1, bei dem die Füllung einen Wassergehalt hat, der 85 % erreicht.

6. Gefüllter Teig nach Anspruch 1, bei dem das filmbildende Protein ein Calciumcaseinat und das Hydrocolloid ein Carrageenan ist.

7. Gefüllter Teig nach Anspruch 2, bei dem das Fett zum Teil in Form eines Öls mit einem Schmelzpunkt unter -15°C und insbesondere eines mehrfach ungesättigten Öls vom Typ Colzaöl vorliegt.

8. Gefüllter Teig nach einem der Ansprüche 1 bis 8 in tiefgefrorener Form.
